# EUROPÄISCHE PATENTSCHRIFT

(11) **EP 2 186 756 B1**
(45) Veröffentlichungstag und Bekanntmachung des Hinweises auf die Patenterteilung: **30.05.2012**
(21) Anmeldenummer: 09010359.9
(22) Anmeldetag: 12.08.2009
(51) Int. Cl.: B65G 25/04

(54) **Horizontalförderer zum Transport von Stückgütern**
Horizontal transporter for transporting piece goods
Transporteur horizontal destiné au transport de marchandises

(30) Priorität: 15.11.2008 DE 102008057587
(43) Veröffentlichungstag der Anmeldung: 19.05.2010
(73) Patentinhaber: Jörg von Seggern Maschinenbau GmbH, 26133 Oldenburg (DE)
(72) Erfinder: von Seggern, Jörg, 26133 Oldenburg (DE)
(74) Vertreter: Jabbusch, Matthias

(56) Entgegenhaltungen:
- US-A- 4 321 995

## Beschreibung

Die Erfindung bezieht sich auf einen Horizontalförderer zum Transport von Stückgütern, insbesondere von Behältern für Lebensmittel, mit zumindest einer wenigstens eine Aufstellfläche für das Fördergut aufweisenden Förderbahn, gemäß dem Oberbegriff des Anspruchs 1.

Bekannte Horizontalförderer sind beispielsweise Gurt- oder Gliederförderer, die eingesetzt werden, um ein Fördergut, üblicherweise in einem kontinuierlichen Fluss, von einer Aufgabestelle zu einer Abgabestelle entlang eines durch den Horizontalförderer ausgebildeten, vorgegebenen Förderweges zu transportieren. Die Horizontalförderer weisen zur Ausbildung der das Fördergut aufnehmenden Förderbahn beispielsweise ein das Zug- und Tragorgan vereinigendes, endloses Gurtband bzw. ein Gliederband auf, dessen Zug- und Tragorgan wiederum getrennt voneinander ausgebildet sind. Als Aufstellfläche für das Fördergut dient beim Gurtförderer insbesondere das Gurtband, das in Form eines endlosen Gurtes an einem Ende der Förderbahn um eine Antriebstrommel und am anderen Ende um eine Umlenktrommel geführt ist und im Bedarfsfall über dazwischen angeordnete Tragrollen gestützt wird. Anstelle eines Gurtbandes werden bei Gliederförderern häufig sich aus einer Vielzahl von Traggliedern, wie Plattenelemente, Kästen oder dergleichen, zusammensetzende Gliederbänder verwendet.

Die bekannten Horizontalförderer setzen dabei in der Regel eine kontinuierliche Förderbewegung der Fördergüter um. Im Bereich ihrer Abgabestelle können gegebenenfalls Schwierigkeiten bei der Übergabe der insbesondere von da ab chargenweise zur Weiterverarbeitung abzuführenden Fördergüter auftreten. So kann es im Bereich der Abgabestelle beispielsweise zum Aufstauen des z. B. von einer Greifvorrichtung zu übernehmenden Fördergutes kommen, was dann zu Verzögerungen oder Störungen im gesamten vorgelagerten Förder- bzw. Verarbeitungsprozess des Fördergutes führen kann.

Aus der US 4 321 995 A ist ein gattungsgemäßer Horizontalförderer zum Transport von Stückgüter gemäß dem Oberbegriff des Anspruchs 1, insbesondere von Behältern für Lebensmittel, mit zumindest einer wenigstens eine Aufstellfläche für das Fördergut aufweisenden Förderbahn, bekannt, bei dem unterhalb der Aufstellfläche der Förderbahn mindestens ein parallel zu deren Förderrichtung beweglich geführtes Schiebeteil angeordnet ist, dem mindestens ein Antriebsmittel für seine zwangsgeführte Bewegung zugeordnet ist, und dass am Schiebeteil mindestens ein in seiner Arbeitshöhe verstellbarer Fördergutmitnehmer angeordnet ist, welcher mittels einer Hubeinrichtung in eine in die Ebene der Aufstellfläche hineinragende Mitnahmestellung bringbar ist.

Mit Hilfe eines derartig ausgebildeten Horizontalförderers lässt sich eine diskontinuierliche bzw. chargenweise Förderung eines Fördergutes vornehmen. Dabei wird durch den sich insbesondere stets fortlaufend hin- und herbewegenden Fördergutmitnehmer ein Aufstauen von Fördergütern im Bereich seiner Ab- bzw. Übergabestelle vermieden. Das nunmehr zyklisch bewegte Fördergut kann dann bereits während seiner Stillstandszeiten direkt auf der Förderbahn weiterverarbeitet werden oder beispielsweise mittels einer Greifvorrichtung in Chargen vorbestimmter Stückzahl von der Förderbahn abgenommen werden, um diese einer nachgeschalteten Weiterverarbeitung zuzuführen.

In dem genannten US-Patent ist für den Antrieb des Schiebeteils eine voluminöse Schiebeführung ausgebildet.

Der Erfindung liegt die Aufgabe zugrunde, einen Horizontalförderer der eingangs genannten Gattung weiter zu verbessern.

Die Lösung der Aufgabe erfolgt erfindungsgemäß durch einen Horizontalförderer mit den Merkmalen des Patentanspruchs 1. Vorteilhafte Weiterbildungen und Ausgestaltungen der Erfindung sind in den Ansprüchen 2 bis 8 angegeben.

Nach der Erfindung ist vorgesehen, dass die Hubeinrichtung zumindest einen Arbeitszylinder für die Hubbewegung des Fördergutmitnehmers am Schiebeteil umfasst. Es wird insbesondere ein doppelt wirkender Zylinder verwendet, welcher die Bewegungsrichtung seines Kolbens über die Druckverhältnisse zu beiden Seiten des Kolbens regelt. Zudem hat der Einsatz eines Arbeitszylinders als Antriebsmittel den Vorteil, dass dieser in Abhängigkeit vom Druck in seinen angeschlossenen Druckleitungen hohe Kräfte zum Bewegen des Fördergutmitnehmers aufbringen kann. Der Arbeitszylinder kann diesbezüglich vertikal ausgerichtet sein, wobei dessen Kolbenstange beispielsweise direkt mit dem jeweils um ein vorbestimmtes Höhenmaß anzuhebenden bzw. abzusenkenden Profilbalken des Fördergutmitnehmers verbunden ist. Als Arbeitszylinder können sowohl Hydraulik- als auch Pneumatikzylinder Anwendung finden.

Erfindungsgemäß ist der Arbeitszylinder mit dem Fördergutmitnehmer insbesondere über ein Umlenkgetriebe gekoppelt, welches eine Kräfte und Bewegungen übertragende Verbindung zwischen den bevorzugt unterschiedliche Bewegungsrichtungen aufweisenden Arbeitszylinder und Fördergutmitnehmer gewährleistet. Der die Hubbewegung des Fördergutmitnehmers umsetzende Arbeitszylinder kann somit eine horizontale Ausrichtung aufweisen, wodurch in vertikaler Richtung ein vorteilhaft verringerter Einbauraum für die Montage der Hubeinrichtung am Schiebeteil benötigt wird.

Das Umlenkgetriebe ist aus zumindest einer mit dem Hubzylinder gekoppelten Kulissenführung mit Gleitbahn und Gleitstein gebildet, welche wenigstens mit einer mit dem Fördergutmitnehmer verbundenen Hubstange gekoppelt ist. Die Ausbildung des Umlenkgetriebes als Kulissenführung stellt eine vorteilhaft einfache Möglichkeit dar, die horizontale Bewegung des Arbeitszylinders in eine etwa senkrecht dazu verlaufende Hubbewegung des Fördergutmitnehmers umzulenken. Zudem ist mittels eines derartig erfindungsgemäß ausgebildeten Umlenkgetriebes auf vorteilhafte Weise sichergestellt, dass der Profilbalken des Fördergutmitnehmers auf seiner gesamten Länge gleichmäßig angehoben wird. Darüber ist stets dessen vorteilhaft waagerechte Ausrichtung und eine vorteilhaft betriebssichere Umsetzfunktion der zu transportierenden Behälter gewährleistet.

Die Förderbahn ist nach einer ersten Weiterbildung der Erfindung aus einer feststehenden Aufstellschiene ausgebildet, wobei zu beiden Seiten der Aufstellschiene Aufnahmen am beweglich geführten Fördergutmitnehmer vorgesehen sein könnten, die ein jeweiliges Fördergut, in der oberen Arbeitsposition des Fördergutmitnehmers, von der Aufstellfläche anheben. Damit wird das Schiebeteil bei angehobenem Fördergutmitnehmer in Förderrichtung verfahren und durch Absenken des Fördergutmitnehmers in seine untere Arbeitsposition wird das Fördergut wiederum auf der Aufstellschiene abgesetzt. Mit solch erfindungsgemäßen Horizontalförderern kann beispielsweise auch ein Übergang von einer kontinuierlichen Förderung eines Fördergutes in eine diskontinuierliche bzw. chargenweise Förderung eines Fördergutes vollzogen werden. Gegebenenfalls kann dazu die Ausbildung eines Pufferbereiches für die unterschiedlich zu- und abgeführten Fördergüter zwischen den verschiedenen Förderbahnen notwendig sein.

Eine vorteilhafte Weiterbildung der Erfindung sieht vor, dass die Förderbahn deren Aufstellfläche ausbildende, parallel zueinander verlaufende Aufstellschienen für das Fördergut aufweist, zwischen denen der Fördergutmitnehmer in einer etwa vertikal verlaufenden Ebene beweglich gehalten ist. Der Einsatz von zwei sich parallel zueinander erstreckenden Führungsschienen stellt eine konstruktiv vorteilhafte Möglichkeit zur Ausbildung der Förderbahn mit ihrer Aufstellfläche dar. Neben der Aufnahme der vorzugsweise hintereinander aufgereihten Fördergüter in der horizontalen Ebene lässt sich mit Hilfe der Aufstellschienen gleichzeitig mit Vorteil eine Führung in Förderrichtung gewährleisten. Somit kann das Fördergut über den Fördergutmitnehmer, durch seine insbesondere nacheinander ablaufenden Schiebe- und Hubbewegungen in einer vertikal ausgerichteten Ebene, auf den Aufnahmeschienen verschoben werden.

Das Schiebeteil weist mindestens einen mittels einer Geradführung schiebebeweglich aufgenommenen Schlitten auf. Der bewegliche Schlitten, der von einem Teil des Schiebeteiles gebildet ist, ist insbesondere von einem ortsfesten Bett der Geradführung aufgenommen. Zudem umgreift der Schlitten Bereiche einer Führungsschiene, wodurch eine vorteilhaft haltende Funktion der Geradführung gegeben und gleichzeitig eine parallele Ausrichtung des Schlittens während der Schiebebewegung entlang der Aufnahmeschienen gewährleistet ist. Als Geradführung kann beispielsweise eine Gleitführung eingesetzt werden, die den Vorteil hat, dass sie eine konstruktiv einfache Ausführungsform darstellt. Es ist ebenfalls denkbar, anstelle einer Gleitführung eine Wälzführung einzusetzen.

Als Antriebsmittel für das Schiebeteil kann insbesondere ein Elektromotor Anwendung finden, mit Hilfe dessen sich die Verschiebebewegung des Schiebeteils auf vorteilhaft einfache Weise vornehmen lässt. Der beispielsweise als Schrittmotor ausgebildete Elektromotor kann dazu gegebenenfalls direkt am Schiebeteil angeordnet sein, wobei ein mit der Motorwelle verbundenes Zahnrad mit einer an einem Gestellrahmen des Förderers angeordneten Zahnstange kämmt.

Nach einer Weiterbildung der Erfindung ist vorgesehen, dass das Antriebsmittel mit dem Schiebeteil über ein dessen Antriebsbewegung übertragendes Übertragungselement gekoppelt ist. Der Einsatz eines Übertragungselementes, wie z. B. eines Zahnriemens, stellt eine vorteilhafte Möglichkeit zur Umwandlung einer durch den Elektromotor erzeugten Drehbewegung in eine translatorische Bewegung des Schiebeteiles dar. Zudem ist durch die feste Anordnung des Antriebsmittels am Gestellrahmen des Horizontalförderers die durch das Antriebsmittel zu bewegende Masse verringert. Bevorzugt ist das als Zahnriemen ausgebildete Übertragungselement mit einem Riemenabschnitt fest am Schiebeteil angeordnet und wird dabei an einem Ende um die Antriebswelle des Elektromotors und an seinem anderen Ende um eine Umlenkrolle geführt.

Der Fördergutmitnehmer weist wenigstens einen Profilbalken mit mehreren in Mitnahmestellung jeweils zwischen einander benachbarte Fördergüter vorstehende Mitnehmer auf. Mit Hilfe der am Profilbalken insbesondere vertikal nach oben gerichteten Mitnehmern erfolgt der Eingriff jeweils zwischen die einzelnen Fördergüter, sodass anstelle einer das Fördergut mittels des Profilbalkens von den Aufstellschienen abhebenden Versatzbewegung mit Vorteil die Fördergüter auf den Aufstellschienen verbleibend über deren Aufstellflächen in Förderrichtung verschoben werden können. Des weiteren werden die Fördergüter gleichzeitig über die Mitnehmer auf der Förderbahn zueinander positioniert, die nach dem Versetzen stets einen gleichmäßigen Abstand zueinander aufweisen und somit relativ einfach von einer die Fördergüter übernehmenden Greifvorrichtung gegriffen werden können. Der Profilbalken erstreckt sich parallel in Förderrichtung und kann zudem mehrere Fördergüter gleichzeitig aufnehmen.

Es liegt selbstverständlich im Rahmen der Erfindung, dass der Fördergutmitnehmer, anstelle eines mit Mitnehmern ausgerüsteten Profilbalkens, einen Profilbalken mit mehreren Aufnahmeaufsätzen für die Fördergüter aufweist. Mittels der beispielsweise an den Profilbalken ausgebildeten bzw. zu montierenden Aufnahmeaufsätzen lassen sich auf vorteilhafte Weise Behälter transportieren, welche nur eine relativ kleine bzw. gar keine Aufstellfläche aufweisen. Somit ist insbesondere ein Verkippen bzw. unvorteilhafte Lage der beispielsweise als Sandwichschalen ausgebildeten Behälter, bei zum Beispiel dem Befüllvorgang, vermieden. Gleichzeitig kann neben dem Profilbalken auch die mittels der Aufstellschienen ausgebildete Förderbahn derartige Aufnahmeaufsätze aufweisen, wodurch eine stets gleichmäßige Versatzbewegung der Fördergüter sichergestellt ist. Gegebenenfalls können die Aufnahmenaufsätze am Profilbalken und den Aufstellschienen der Förderbahn abnehmbar ausgebildet sein.

Dabei ist ein die Gleitbahn der Kulissenführung aufweisendes Führungsteil mit der Kolbenstange des Arbeitszylinders verbunden und der Gleitstein der Kulissenführung fest an der Hubstange der Linearführung angeordnet. Bei einer Bewegung der Kolbenstange des Arbeitszylinders wird gleichzeitig das Führungsteil verschoben, was gleichzeitig eine Bewegung des Gleitsteines in der beispielsweise als Schlitz oder Nut ausgebildeten Gleitbahn bewirkt. Die Gleitbahn weist insbesondere einen geschwungenen Verlauf auf, über den eine Höhenänderung des Gleitsteins und somit der den Fördergutmitnehmer bewegenden Hubstange erfolgt.

Ein Ausführungsbeispiel der Erfindung, aus dem sich weitere erfinderische Merkmale ergeben, ist in der Zeichnung dargestellt. Es zeigen:

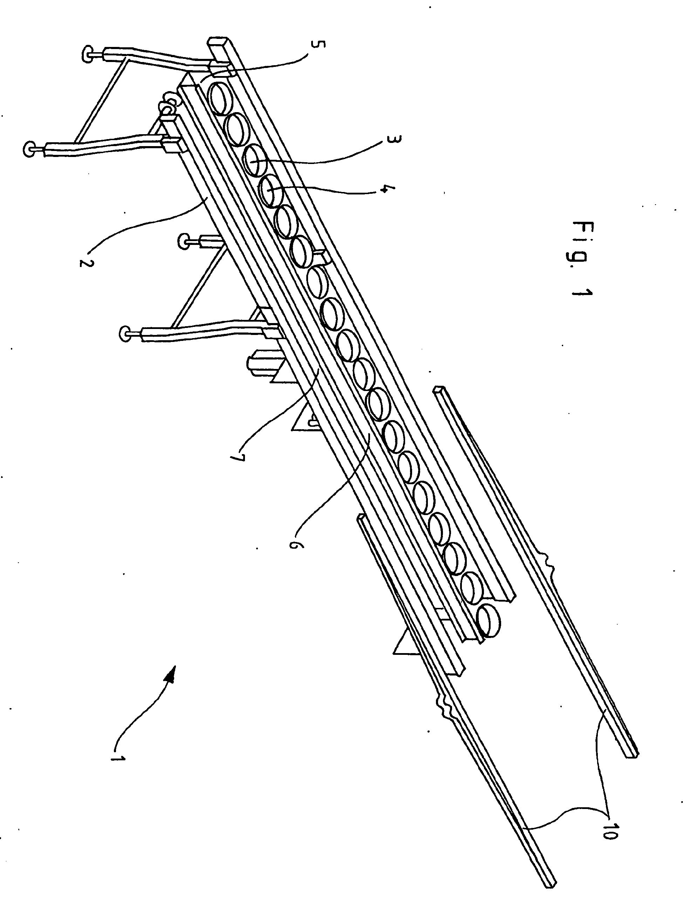

- Fig. 1:: eine perspektivische Ansicht eines erfindungs- gemäßen Horizontalförderers;
- Fig. 2:: eine Ansicht des Horizontalförderers nach Figur 1 im Querschnitt, und
- Fig. 3:: eine Detailansicht eines erfindungsgemäßen Fördergutmitnehmers mit seiner Hubeinrichtung.

Mit 1 ist ein Horizontalförderer insbesondere zum Transport von Stückgütern bezeichnet, welcher einen Gestellrahmen 2 und zwei am Gestellrahmen angeordnete, eine Förderbahn für die Fördergüter 3, 4 ausbildende Aufstellschienen 5, 6 aufweist. Zwischen den parallel zueinander verlaufenden Aufstellschienen 5, 6 ist ein beweglich geführtes Schiebeteil 7 angeordnet, welches über ein vorzugsweise als Elektromotor ausgebildetes Antriebsmittel zwangsbewegt wird. Am Schiebeteil 5 ist wenigstens ein Fördergutmitnehmer 8 angeordnet, welcher mittels einer Hubeinrichtung 9 in seiner Arbeitshöhe verstellbar ist, sodass dieser in eine in die Ebene der Aufstellfläche hineinragende Mitnahmestellung bringbar ist. Der Horizontalförderer 1 setzt darüber eine diskontinuierliche bzw. chargenweise Förderung der Fördergüter 3, 4 um, sodass eine dem Endabschnitt des Horizontalförderers zugeordnete Greifvorrichtung 10 eine vorbestimmte Anzahl von Fördergütern von der Förderbahn problemlos abnehmen kann.

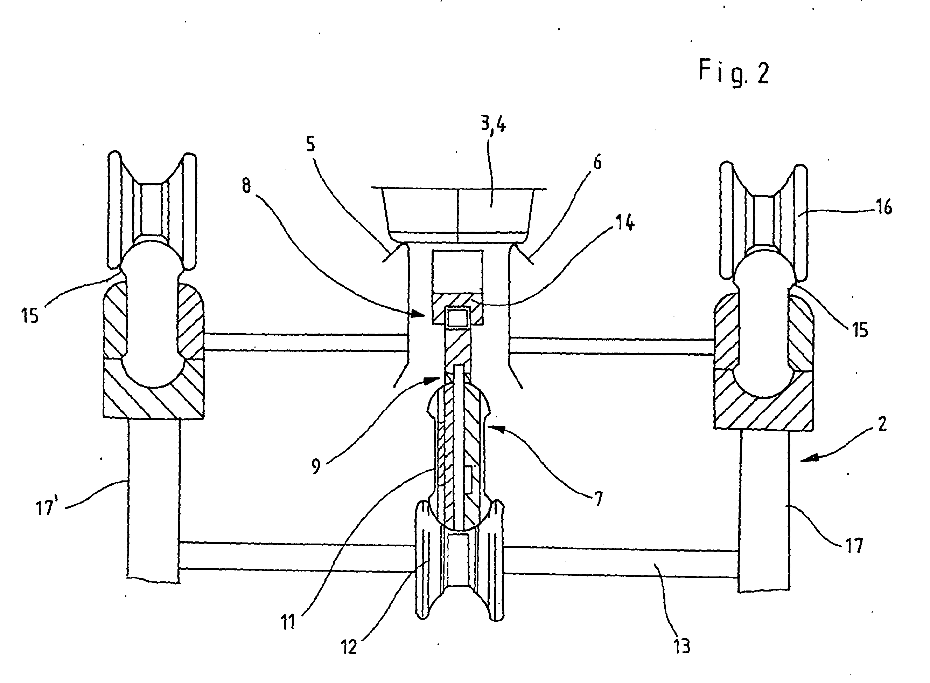

Figur 2 zeigt den erfindungsgemäßen Horizontalförderer im Querschnitt, wodurch dessen Aufbau verdeutlicht werden soll. Das Schiebeteil 7 weist mindestens einen über eine Geradführung schiebebeweglich aufgenommenen Schlitten 11 auf, der auf Rollen 12 gelagert ist. Die Rollen 12 der Geradführung sind dabei über quer zur Förderrichtung ausgerichtete Streben 13 des Gestellrahmens 2 aufgenommen. Der beweglich am Schiebeteil 7 gehaltene Fördergutmitnehmer 8 ist hier in seiner unteren Arbeitsstellung gezeigt, wobei ein den Fördergutmitnehmer zumindest teilweise ausbildender Profilbalken 14 problemlos unterhalb der Fördergüter 3, 4 verschoben werden kann. Der Gestellrahmen 2 des Horizontalförderers weist des Weiteren zwei parallel zueinander ausgerichtete Schienenprofile 15, 15' zur Aufnahme und Führung eines nicht näher dargestellten Verfüllwagens auf. Jedes Schienenprofil 15, 15' ist insbesondere ein geschlossenes Hohlprofil, auf dem Rollelemente 16 des Verfüllwagens abrollen und innerhalb diesem beispielsweise Kabel oder Versorgungsleitungen geführt werden können. Gleichzeitig können an den Schienenprofilen 15, 15' mittels entsprechender Formschlussverbindungen Gestellfüße 17, 17', welche ebenfalls Teil des Gestellrahmens 2 sind, befestigt sein. Zudem ist durch den ausschließlich unterhalb der Behälter geführten Fördergutmitnehmer und des relativ zum Einsatz kommenden, relativ offen gehaltenen Gestellrahmens, im Falle des Übertretens von Füllgüter an den Behälterrändern ein relativ geringer Verschmutzungsgrad der Vorrichtung gegeben, was die Reinigung mit Vorteil vereinfacht.

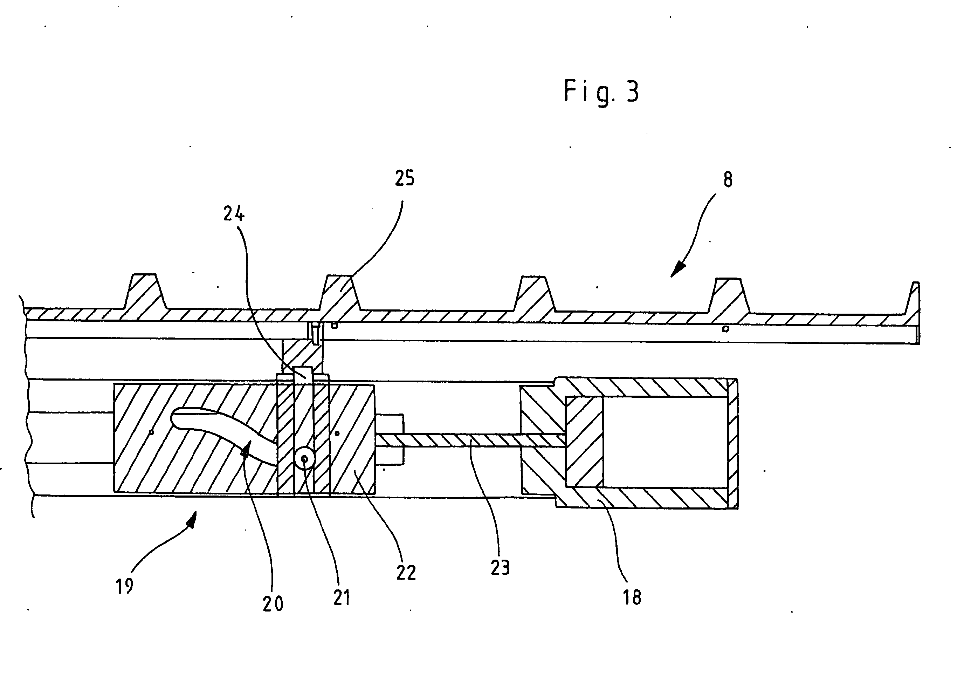

In Figur 3 ist eine Detailansicht der insbesondere am Schiebeteil 7 angeordneten Hubeinrichtung 9 abgebildet. Die Hubeinrichtung 9 umfasst zumindest einen Arbeitszylinder 18 für eine insbesondere vertikal zwischen den Aufstellschienen 5, 6 umzusetzende Hubbewegung des Fördergutmitnehmers 8. Um den Einbauraum für die Hubeinrichtung 9 in vertikaler Ausrichtung relativ gering ausgestalten zu können, ist der Arbeitszylinder 18 horizontal ausgerichtet und über ein Umlenkgetriebe 19 mit dem Fördergutmitnehmer 8 gekoppelt. Das Umlenkgetriebe 19 ist vorzugsweise als Kulissenführung mit einer kurvenförmigen Gleitbahn 20 und einem in der Gleitbahn geführten Gleitstein 21 ausgebildet. Ein die Gleitbahn ausbildendes Führungsteil 22 ist mit der Kolbenstange 23 des Arbeitszylinders 18 verbunden, sodass bei einer Änderung der Kolbenstellung im Arbeitszylinder 18 sich automatisch die Stellung bzw. Position des Gleitsteins 21 in der Gleitbahn 20 ändert. Der Gleitstein 21 ist dabei fest an einer Hubstange 24 angeordnet, welche direkt mit dem Profilbalken 14 des Fördergutmitnehmers 8 verbunden ist und dementsprechend bei einer Änderung der Kolbenstellung des Arbeitszylinders 17 den Profilbalken 14 in eine entsprechende Arbeitsposition bringt, sodass die in regelmäßigen Abständen am Profilbalken 14 ausgebildeten Mitnehmer 25 in der oberen Arbeitsposition zwischen die sich auf der Förderbahn befindlichen Fördergüter vorstehen. Dabei wird der Profilbalken 14 über seine gesamte Länge gleichmäßig angehoben. Bei einer sich daran anschließenden Horizontalbewegung des Schiebeteiles 7 werden nunmehr die Fördergüter auf der Förderbahn zumindest mittels der dazwischen eingreifenden Mitnehmer 25 verschoben.

## Patentansprüche

1. Horizontalförderer (1) zum Transport von Stückgütern (3,4), insbesondere von Behältern für Lebensmittel, mit zumindest einer wenigstens eine Aufstellfläche (5,6) für das Fördergut (3,4) aufweisenden Förderbahn, wobei unterhalb der Aufstellfläche der Förderbahn mindestens ein parallel zu deren Förderrichtung beweglich geführtes Schiebeteil (7) angeordnet ist, dem mindestens ein Antriebsmittel für seine zwangsgeführte Bewegung zugeordnet ist, und am Schiebeteilmindestens einen in seiner Arbeitshöhe verstellbarer Fördergutmitnehmer (8) angeordnet ist, welcher mittels einer Hubeinrichtung (9) in eine in die Ebene der Aufstellfläche hineinragende Mitnahmestellung bringbar ist,
wobei die Hubeinrichtung (9) zumindest einen Arbeitszylinder (18) für die Hubbewegung des Fördergutmitnehmers (8) am Schiebeteil (7) umfasst, der Arbeitszylinder (18) mit dem Fördergutmitnehmer (8) über ein Umlenkgetriebe (19) gekoppelt ist, **dadurch gekennzeichnet, dass** das Umlenkgetriebe (19) aus zumindest einer mit dem Arbeitszylinder (18) gekoppelten Kulissenführung mit Gleitbahn (20) und Gleitstein (21) gebildet ist, welche wenigstens mit einer mit dem Fördergutmitnehmer (8) verbundenen Hubstange (24) gekoppelt ist.

2. Horizontalförderer nach Anspruch 1, **dadurch gekennzeichnet, dass** die Förderbahn deren Aufstellfläche ausbildende, parallel zueinander verlaufende Aufstellschienen (5, 6) für das Fördergut aufweist, zwischen denen der Fördergutmitnehmer (8) in einer etwa vertikal verlaufenden Ebene beweglich gehalten ist.

3. Horizontalförderer nach Anspruch 1 oder 2, **dadurch gekennzeichnet, dass** das Schiebeteil (7) mindestens einen mittels einer Geradführung schiebebeweglich aufgenommenen Schlitten (11) aufweist.

4. Horizontalförderer nach einem der Ansprüche 1 bis 3, **dadurch gekennzeichnet, dass** das Antriebsmittel für das Schiebeteil (7) ein Elektromotor ist.

5. Horizontalförderer nach einem der Ansprüche 1 bis 4, **dadurch gekennzeichnet, dass** das Antriebsmittel mit dem Schiebeteil (7) über ein dessen Antriebsbewegung übertragendes Übertragungselement gekoppelt ist.

6. Horizontalförderer nach einem der Ansprüche 1 bis 5, **dadurch gekennzeichnet, dass** der Fördergutmitnehmer (8) wenigstens einen Profilbalken (14) mit mehreren, in Mitnahmestellung jeweils zwischen zwei einander benachbarte Fördergüter vorstehende Mitnehmer (25) aufweist.

7. Horizontalförderer nach einem der Ansprüche 1 bis 5, **dadurch gekennzeichnet, dass** der Fördergutmitnehmer (8) einen Profilbalken mit mehreren Aufnahmeaufsätzen für die Fördergüter aufweist.

8. Horizontalförderer nach einem der vorhergehenden Ansprüche, **dadurch gekennzeichnet, dass** ein die Gleitbahn (20) ausbildendes Führungsteil (22) der Kulissenführung mit der Kolbenstange (23) des Arbeitszylinders (18) verbunden und der Gleitstein (21) der Kulissenführung an der Hubstange (24) der Geradführung angeordnet ist.

## Claims

1. A horizontal conveyor (1) for transporting piece goods (3, 4) in particular containers for food, having at least one conveyor track which has at least one supporting surface (5, 6) for the conveyed goods (3, 4), wherein beneath the supporting surface of the conveyor track at least one pushing part (7) is arranged, which is guided in a movable manner parallel to the conveying direction of the conveyor track and to which at least one drive means is assigned for the positively driven movement thereof, and on the pushing part at least one conveyed goods carrier (8) is arranged, which has an adjustable working height and can be brought by means of a lifting device (9) into a carrying position which projects into the plane of the supporting surface, wherein the lifting device (9) comprises at least one working cylinder (18) for the lifting movement of the conveyed goods carrier (8) on the pushing part (7), and the working cylinder (18) is coupled to the conveyed goods carrier (8) by means of an angle gear (19),
**characterised in that**
the angle gear (19) is formed from at least one slotted guide which is coupled to the working cylinder (18), has a sliding track (20) and a sliding block (21) and is coupled at least to a lifting rod (24) which is connected to the conveyed goods carrier (8).

2. The horizontal conveyor according to Claim 1, **characterised in that** the conveyor track has parallel supporting rails (5, 6) for the conveyed goods, which form the supporting surface of the conveyor track, and between which the conveyed goods carrier (8) is held movably in an approximately vertical plane.

3. The horizontal conveyor according to Claim 1 or 2, **characterised in that** the pushing part (7) has at least one carriage (11), which is held in a displaceable manner by means of a linear guide.

4. The horizontal conveyor according to one of Claims 1 to 3, **characterised in that** the driving means for the pushing part (7) is an electric motor.

5. The horizontal conveyor according to one of Claims 1 to 4, **characterised in that** the driving means is coupled to the pushing part (7) by means of a transmission element which transmits the driving movement thereof.

6. The horizontal conveyor according to one of Claims 1 to 5, **characterised in that** the conveyed goods carrier (8) has at least one profiled bar (14) with a plurality of carriers (25) which each project between two adjacent conveyed items when in the carrying position.

7. The horizontal conveyor according to one of Claims 1 to 5, **characterised in that** the conveyed goods carrier (8) has a profiled bar with a plurality of receiving attachments for the conveyed goods.

8. The horizontal conveyor according to any one of the preceding claims, **characterised in that** a guiding part (22) of the slotted guide which forms the sliding track (20) is connected to the piston rod (23) of the working cylinder (18) and the sliding block (21) of the slotted guide is arranged on the lifting rod (24) of the linear guide.

## Revendications

1. Transporteur horizontal (1) pour le transport de marchandises de détail (3, 4), en particulier de conteneurs pour des denrées alimentaires, doté d'au moins une bande transporteuse présentant au moins une surface de mise en place (5, 6) pour la marchandise transportée (3, 4), sachant qu'au-dessous de la surface de mise en place de la bande transporteuse est disposée au moins une partie coulissante (7) guidée de façon mobile parallèlement à son sens de transport, partie à laquelle est attribué au moins un moyen d'entraînement pour son déplacement guidé de force, et au moins un entraîneur de marchandise transportée (8) réglable dans sa hauteur de travail étant disposé sur la partie coulissante, lequel entraîneur peut être amené au moyen d'un dispositif de levage (9) dans une position d'entraînement dépassant dans le plan de la surface de mise en place,
le dispositif de levage (9) comprenant au moins un cylindre de travail (18) pour le mouvement de levage de l'entraîneur de marchandise transportée (8) sur la partie coulissante (7), le cylindre de travail (18) étant couplé avec l'entraîneur de marchandise transportée (8) au moyen d'un mécanisme d'inversion (19), **caractérisé en ce que** le mécanisme d'inversion (19) est formé d'au moins un guide à coulisse couplé avec le cylindre de travail (18) avec glissière (20) et coulisseau (21), lequel guide est couplé au moins avec une barre de levage (24) reliée à l'entraîneur de marchandise transportée (8).

2. Transporteur horizontal selon la revendication 1, **caractérisé en ce que** la bande transporteuse présente des rails de mise en place (5, 6), formant sa surface de mise en place, agencés parallèlement entre eux, pour la marchandise transportée, rails entre lesquels l'entraîneur de marchandise transportée (8) est maintenu de façon mobile dans un plan agencé à peu près verticalement.

3. Transporteur horizontal selon la revendication 1 ou 2, **caractérisé en ce que** la partie coulissante (7) présente au moins un chariot (11) réceptionné au moyen d'un guide droit de façon mobile en coulissement.

4. Transporteur horizontal selon l'une des revendications 1 à 3, **caractérisé en ce que** le moyen d'entraînement pour la partie coulissante (7) est un moteur électrique.

5. Transporteur horizontal selon l'une des revendications 1 à 4, **caractérisé en ce que** le moyen d'entraînement est couplé avec la partie coulissante (7) au moyen d'un élément de transmission transmettant son mouvement d'entraînement.

6. Transporteur horizontal selon l'une des revendications 1 à 5, **caractérisé en ce que** l'entraîneur de marchandise transportée (8) présente au moins une poutre profilée (14) dotée de plusieurs entraîneurs (25) dépassant en position d'entraînement à chaque fois entre deux marchandises transportées voisines l'une de l'autre.

7. Transporteur horizontal selon l'une des revendications 1 à 5, **caractérisé en ce que** l'entraîneur de marchandise transportée (8) présente une poutre profilée avec plusieurs supports de réception pour les marchandises transportées.

8. Transporteur horizontal selon l'une des revendications précédentes, **caractérisé en ce qu'**une partie de guidage (22), formant la glissière (20), du guide à coulisse est reliée à la tige de piston (23) du cylindre de travail (18) et le coulisseau (21) du guide à coulisse est disposé sur la barre de levage (24) du guide droit.
